# EUROPEAN PATENT APPLICATION

(11) **EP 4 395 061 A1**
(43) Date of publication of application: **03.07.2024**
(21) Application number: 22882635.0
(22) Date of filing: 30.09.2022
(51) Int. Cl.: H01M 50/627, H01M 50/183, H01M 50/325

(54) **CELL AND ELECTRICAL APPARATUS**

(30) Priority: 18.10.2021 CN 202111211612
(71) Applicant: Ningde Amperex Technology Limited, Ningde, Fujian 352100 (CN)
(72) Inventor: LIU, Ya, Ningde, Fujian 352100 (CN)
(74) Representative: Icosa
(86) International application number: PCT/CN2022/123488
(87) International publication number: WO 2023/066024

(57) **Abstract**

This application relates to the technical field of batteries, and discloses a battery cell and an electrical device. The battery cell includes a cell body and a housing. The housing defines an accommodation cavity. The cell body is accommodated in the accommodation cavity. The housing includes an injection port communicating with the accommodation cavity. The battery cell further includes: a sealing pin, vertically mounted at the injection port and fixed to the housing, wherein the sealing pin includes a first through-hole, and the first through-hole communicates with the accommodation cavity; a thermally deformable piece, filling in the first through-hole and fixed to the sealing pin; and an elastic element, wherein the elastic element includes a second through-hole and is set around the sealing pin through the second through-hole and fixed to the injection port. The thermally deformable piece is configured to deform when a temperature is higher than a preset threshold, so that a pressure relief channel communicating with both ends of the first through-hole is formed in the first through-hole. In this way, gas can be exhausted out of the battery cell to reduce the safety hazards of battery cell explosion. At the same time, the elastic element improves airtightness of the injection port.

## Description

This application claims priority to Chinese Patent Application No. 202111211612.1, filed with the Chinese Patent Office on October 18, 2021 and entitled "BATTERY CELL AND ELECTRICAL DEVICE", which is incorporated herein by reference in its entirety.

### TECHNICAL FIELD

This application relates to the technical field of batteries, and in particular, to a battery cell and an electrical device.

### BACKGROUND

A battery cell is a device that converts external energy into electrical energy and stores the electrical energy internally so that the electrical energy can be supplied to an external device (such as a portable electronic device) when necessary. Currently, battery cells are widely used in electronic products such as a mobile phone, a tablet, and a notebook computer.

The battery cell keeps generating heat under high temperature conditions or in a short circuit process, consequently accumulating heat inside the battery cell. This may cause thermal runaway of the battery cell and generate high-temperature and high-pressure gas inside the battery cell. If the gas is not exhausted in time, the battery cell is prone to safety accidents such as explosion due to gassing. Therefore, it is currently necessary to provide a battery cell that can exhaust the gas when the temperature of the battery cell is higher than a specified value, so as to improve the safety performance of the battery cell.

### SUMMARY

An objective of this application is to provide a battery cell and an electrical device to alleviate the current disadvantage that the gas in the battery cell is unable to be exhausted in time when the temperature is higher than a specified value.

To solve the technical problem, some embodiments of this application put forward the following technical solution:

A battery cell, including a cell body and a housing; wherein the housing defines an accommodation cavity, the cell body is accommodated in the accommodation cavity, and the housing includes an injection port communicating with the accommodation cavity. The battery cell further includes:
a sealing pin, vertically mounted at the injection port and fixed to the housing; wherein the sealing pin includes a first through-hole, and the first through-hole communicates with the accommodation cavity;
a thermally deformable piece, filling in the first through-hole and fixed to the sealing pin; and
an elastic element including a second through-hole and is sheathed around the sealing pin through the second through-hole and is fixed to the injection port.

The thermally deformable piece is configured to deform when a temperature is higher than a preset threshold, so that two ends of the first through-hole communicate with each other to form a pressure relief channel.

In some embodiments, the elastic element includes a fixing portion and a sealing portion coaxially connected to the fixing portion. The second through-hole runs through the sealing portion from the fixing portion. The fixing portion is fixed to the injection port. The sealing portion extends into the accommodation cavity.

In some embodiments, along a direction perpendicular to a direction in which the fixing portion extends to the sealing portion, in a part of the sealing portion placed in the accommodation cavity, a cross-sectional area of a outer contour of the sealing portion at an end close to the injection port is larger than a cross-sectional area of the injection port.

In some embodiments, the sealing pin includes a pinhead and a pin rod coaxially connected to the pinhead. The first through-hole runs through the pin rod from the pinhead. The pin rod is mounted onto the injection port. The pinhead is fixed onto the housing. The elastic element is set around the pin rod.

In some embodiments, along the direction perpendicular to the direction in which the fixing portion extends to the sealing portion, a cross-sectional area of a outer contour of the pinhead is larger than the cross-sectional area of the injection port. A rim of the pinhead is hermetically fixed to the housing by welding.

In some embodiments, the fixing portion and the sealing portion are integrally formed, and/or the pinhead and the pin rod are integrally formed.

In some embodiments, a diameter A of the injection port satisfies: 2 mm ≤ A ≤ 5mm; and a diameter B of the first through-hole satisfies: 1 mm ≤ B ≤ 4 mm.

In some embodiments, along the direction perpendicular to the direction in which the fixing portion extends to the sealing portion, a clearance C between the injection port and the pin rod satisfies: 0.2 mm ≤ C ≤ 2 mm.

In some embodiments, along a direction perpendicular to an axial direction of the injection port, a distance D between a maximum outer diameter of the sealing portion and the pin rod satisfies: 0.4 mm ≤ D ≤ 2.5 mm.

In some embodiments, the thermally deformable piece is an insulation piece.

In some embodiments, the sealing pin includes a metal; and/or
the thermally deformable piece includes at least one of polyethylene, polypropylene, polyphenylene ether, or poly(acrylonitrile-co-styrene-co-butadiene); and/or
the elastic element includes at least one of ethylene-propylene rubber, silicone rubber, polyurethane rubber, or fluororubber.

In some embodiments, the housing is a stainless steel shell.

In some embodiments, the thermally deformable piece is configured to melt or shrink when the temperature is higher than the preset threshold, so as to form the pressure relief channel in the first through-hole.

Another embodiment of this application further provides an electrical device, and the electrical device includes any one of the foregoing battery cells.

Beneficial effects of this application are as follows:

The battery cell according to some embodiments of this application includes a housing, a sealing pin, a thermally deformable piece, and an elastic element. The housing includes an injection port communicating with the accommodation cavity. The sealing pin is mounted at the injection port and fixed to the housing. The sealing pin includes a first through-hole. The thermally deformable piece fills in the first through-hole and is fixed to the sealing pin. A second through-hole is made on the elastic element. The elastic element is set around the sealing pin through the second through-hole and is fixed to the injection port. The thermally deformable piece is configured to deform when the temperature is higher than a preset threshold, so that a pressure relief channel communicating with both ends of the first through-hole is formed in the first through-hole.

In contrast to the battery cell currently available in the market, the battery cell and the electrical device according to some embodiments of this application are superior in that the internal thermally deformable piece deforms when the temperature in the battery cell is higher than a preset threshold. In this way, a pressure relief channel is formed in the first through-hole of the sealing pin to exhaust the gas out of the battery cell and reduce safety hazards of battery cell explosion. In addition, the elastic element improves airtightness of the injection port.

### BRIEF DESCRIPTION OF DRAWINGS

One or more embodiments are described illustratively with reference to corresponding drawings. The illustrative description does not constitute any limitation on the embodiments. Components marked with the same reference numeral in the drawings represent similar components. Unless otherwise expressly specified, the drawings are not drawn to scale.
FIG. 1 is a schematic diagram of a partial structure of a battery cell according to an embodiment of this application;
FIG. 2 is a schematic sectional view of a battery cell as viewed from one direction according to an embodiment of this application;
FIG. 3 is a schematic diagram of mounting a sealing assembly and a housing in the battery cell shown in FIG. 2;
FIG. 4 is a schematic diagram of dimensions of a sealing assembly in the battery cell shown in FIG. 2; and
FIG. 5 is a schematic diagram of an electrical device according to an embodiment of this application.

### DETAILED DESCRIPTION OF EMBODIMENTS

For ease of understanding this application, the following describes this application in more detail with reference to drawings and specific embodiments. It is hereby noted that an element referred to herein as being "fixed to", "fastened to", or "mounted to" another element may be directly disposed on the other element, or may be fixed or fastened to the other element with one or more elements in between. An element referred to herein as "connected to" another element may be connected to the other element directly or with one or more elements in between. The terms "vertical", "horizontal", "left", "right", "in", "out" and other similar expressions used herein are merely for ease of description.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein is intended to include any and all combinations of one or more relevant items recited.

In addition, to the extent that no mutual conflict occurs, the technical features described below in different embodiments of this application may be combined with each other.

In this specification, the meanings of "mounting" or "installation" include fixing or confining an element or unit to a specific position or place by welding/soldering, screwing, snap-fit connection, bonding, or other means, where the element or unit may be held stationary in the specific position or place or may move within a limited range, and the element or unit may be detachable or undetachable after being fixed or confined to the specific position or place, without being limited in embodiments of this application.

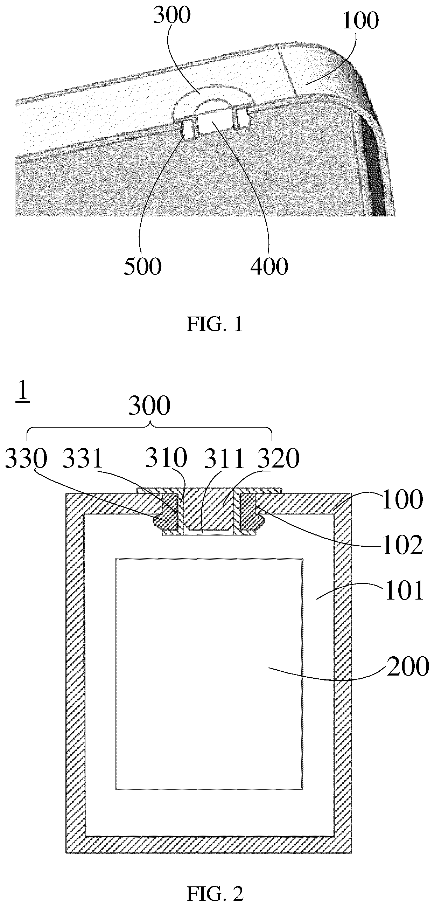

Referring to FIG. 1 and FIG. 2, which is a schematic diagram of a partial structure of a battery cell 1 according to an embodiment of this application, and a schematic sectional view of the battery cell 1, respectively, the battery cell 1 includes a housing 100, a cell body 200, and a sealing assembly 300. The housing 100 defines an accommodation cavity 101 inside, and includes an injection port 102 that communicates with the accommodation cavity 101 of the battery cell 1. The cell body 200 is accommodated in the accommodation cavity 101. The sealing assembly is mounted at the injection port 102.

With respect to the housing 100, referring to FIG. 2, the housing 100 is in the shape of a flattened cuboid as a whole. The accommodation cavity 101 inside the housing is configured to accommodate the cell body 200 and an electrolyte. In this embodiment, the battery cell 1 is a steel-shell cell. That is, the housing 100 is a steel shell. Understandably, in other embodiments of this application, the battery cell 1 may be another type of hard-shell cell instead. That is, the housing 100 is another metal housing such as an aluminum housing.

Referring to FIG. 2, the cell body 200 is accommodated in the accommodation cavity 101, and includes a first electrode plate (not shown in the drawing), a second electrode plate (not shown in the drawing), and a separator (not shown in the drawing) that are stacked. The first electrode plate and the second electrode plate have opposite polarities and are spaced out, of which one is a positive electrode plate and the other is a negative electrode plate. The separator is disposed between the two electrode plates and is configured to separate the two electrode plates. The first electrode plate, the second electrode plate, and the separator are stacked and wound into a winding structure with an oblong cross section so as to be accommodated in the accommodation cavity 101. Understandably, although the cell body 200 in this embodiment is of a winding structure, this application is not limited to the type of the structure. In other embodiments of this application, the cell body 200 may be of a stacked structure instead. The housing 100 is filled with an electrolyte. The cell body 200 is infiltrated by the electrolyte. The electrolyte is configured to provide an environment for conducting lithium ions. In this way, the lithium ions can be intercalated into the first electrode plate or the second electrode plate in time, thereby implementing charge-and-discharge processes of the battery cell 1.

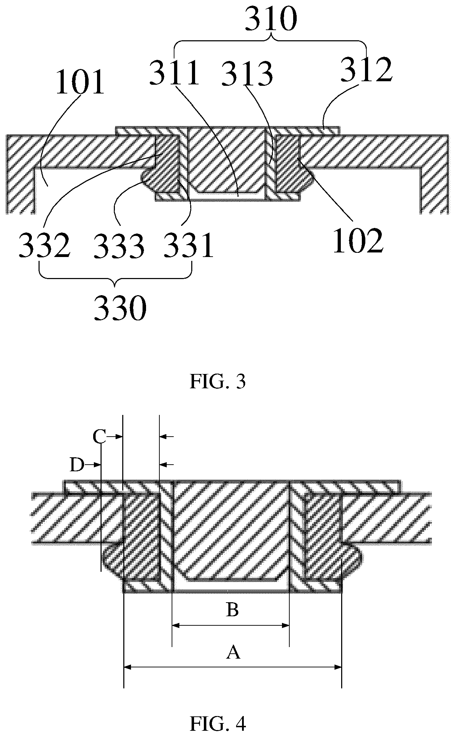

For details of the sealing assembly 300, referring to FIG. 2 and FIG. 3, the sealing assembly 300 is mounted at the injection port 102, and includes a sealing pin 310, a thermally deformable piece 320, and an elastic element 330. The sealing pin 310 is vertically mounted at the injection port 102 and fixed to the housing 100. The sealing pin 310 includes a first through-hole 311. The first through-hole 311 communicates with the accommodation cavity 101. The thermally deformable piece 320 fills in the first through-hole 311 and is fixed to the sealing pin 310. The elastic element 330 includes a second through-hole 331, and the elastic element 331 is set around the sealing pin 310 through the second through-hole 331 and fixed to the injection port 102. The thermally deformable piece 320 is configured to deform when a temperature is higher than a preset threshold, so that two ends of the first through-hole 311 communicate with each other to form a pressure relief channel. In this way, when the temperature of the battery cell 1 rises above the preset threshold, the high-pressure gas generated inside it can be exhausted to the external environment of the battery cell 1 through the pressure relief channel, thereby preventing gas-induced expansion of the battery cell 1 and reducing or eliminating the explosion hazard of the battery cell 1.

It is hereby noted that the "preset threshold" referred to herein means a temperature value to which the temperature of the battery cell 1 rises so that the thermally deformable piece 320 just deforms to form a pressure relief channel in the second through-hole 331 of the elastic element 330. When the temperature of the battery cell 1 is higher than the preset threshold, the pressure relief channel has been formed. The preset threshold is a temperature value higher than the normal operating temperature of the battery cell 1 but lower than a thermal runaway temperature of the battery cell 1. In other words, when the battery cell 1 is in a normal operating state, the temperature of the battery cell is lower than the preset threshold, so as to avoid formation of the pressure relief channel during normal operation of the battery cell. When the battery cell 1 is in a thermal runaway state, the temperature of the battery cell is higher than the preset threshold, so as to prevent failure of exhausting gas out of the battery cell 1 in time in the case of thermal runaway.

It is hereby noted that the "deformation" referred to herein specifically includes hot melt and shrinkage.

With respect to the sealing pin 310, referring to FIG. 3, the sealing pin 310 includes a pinhead 312 and a pin rod 313 coaxially connected to the pinhead 312. The first through-hole 311 runs through the pin rod 313 from the pinhead 312. The pin rod 313 is mounted onto the injection port 102 and extends into the accommodation cavity 101. The pinhead 312 is exposed in the external environment of the battery cell 1, and is fixed onto the housing 100. The elastic element 330 is set around the pin rod 313.

In some embodiments, along a direction perpendicular to a direction in which the pinhead 312 extends to the pin rod 313, a cross-sectional area of a outer contour of the pinhead 312 is larger than the cross-sectional area of the injection port 102. A rim of the pinhead 312 is hermetically fixed to the housing 100 by welding.

In some embodiments, the sealing pin 310 includes a metal. That is, the material of the sealing pin 310 includes a metal.

In some embodiments, the pinhead 312 and the pin rod 313 are integrally formed.

In some embodiments, the sealing rod 310 also serves as an electrode post, and is made of a conductive material. The pinhead 312 of the sealing pin is exposed to the external environment of the battery cell 1, so as to facilitate electrical connection to an external electrical load. The pin rod 313 extends into the accommodation cavity 101 and is electrically connected to an electrode plate in the cell body 200, so that the electrode post constitutes an external terminal of the battery cell 1. In addition, the other electrode plate in the cell body 200 is electrically connected to the housing 100, so that the housing 100 as a whole constitutes another external terminal of the battery cell 1.

The thermally deformable piece 320 is a core element of the sealing assembly 300 capable of relieving pressure in this application. The thermally deformable piece 320 is of a winding structure as a whole, and fills in the first through-hole 311 and is fixed to the pin rod 313. The winding structure is not limited to a cylindrical shape, but may be a quadrilateral column shape instead, or may be a winding structure with a polygonal cross-section so long as the structure can fill in and be fixed to the first through-hole 311.

The thermally deformable piece 320 is made of a material with a relatively low melting point, thereby facilitating the thermally deformable piece to deform in the form such as melting or shrinking before thermal runaway of the battery cell 1, so as to form a pressure relief channel in the first through-hole 311 to let the gas escape through the channel. For example, the normal operating temperature of the battery cell 1 is lower than 100 °C, and the thermal runaway temperature of the battery cell is 150 °C. Considering that heat shrinkage can achieve the purpose of pressure relief, the thermally deformable piece 320 is preferably made of a material that melts at 110 °C to 170 °C. Optionally, the thermally deformable piece 320 includes at least one of polyethylene, polypropylene, polyphenylene ether, or poly(acrylonitrile-co-styrene-co-butadiene), or a combination thereof.

In some embodiments, the thermally deformable piece 320 is an insulation piece.

The elastic element 330 includes a fixing portion 332 and a sealing portion 333 coaxially connected to the fixing portion 332. The second through-hole 331 runs through the sealing portion 333 from the fixing portion 332. The fixing portion 332 is fixed to the injection port 102, and the sealing portion 333 extends into the accommodation cavity 101.

The elastic element 330 is set around the pin rod 313 through an inner wall of the second through-hole 331, and is mounted at the injection port 102 through an outer wall of the fixing portion 332. Optionally, the sealing pin 310 is fixed to the thermally deformable piece 320 and the elastic element 330 by hot-melt connection. Alternatively, in other embodiments of this application, the sealing pin 310, the thermally deformable piece 320, and the elastic element 330 may be fixed in other ways, without being limited in this application.

In some embodiments, in order to seal the injection port more firmly, along a direction perpendicular to a direction in which the fixing portion 332 extends to the sealing portion 333, in a part of the sealing portion 333 extending into the accommodation cavity 101, a cross-sectional area of a outer contour of the sealing portion at an end close to the injection port 102 is larger than a cross-sectional area of the injection port 102, and the cross-sectional area of the outer contour of the sealing portion at an end away from the injection hole 102 is not limited. In other words, along the direction perpendicular to the fixing portion 332 and extending to the sealing portion 333, in the part of the sealing portion 333 extending into the accommodation cavity 101, the cross-sectional area of the outer contour of the sealing portion may gradually increase, or may increase first and then decrease, or may gradually decrease, as long as it is ensured that: in the part of the sealing portion 333 extending into the accommodation cavity 101, the cross-sectional area of the outer contour of the sealing portion at an end close to the injection port is larger than the cross-sectional area of the injection port.

In some embodiments, the fixing portion 332 and the sealing portion 333 are integrally formed.

Understandably, the direction in which the fixing portion 332 extends toward the sealing portion 333 is the same as the direction in which the pinhead 312 extends toward the pin rod 313.

In some embodiments, the elastic element 330 includes at least one of ethylene-propylene rubber, silicone rubber, polyurethane rubber (UR), or fluororubber.

In some embodiments, referring to FIG. 4, a diameter A of the injection port 102 satisfies: 2 mm ≤ A ≤ 5mm.

In some embodiments, a diameter B of the first through-hole 311 satisfies: 1 mm ≤ B ≤ 4 mm.

In some embodiments, along the direction perpendicular to the fixing portion 332 and extending to the sealing portion 333, a clearance C between the injection port 102 and the pin rod 313 satisfies: 0.2 mm ≤ C ≤ 2 mm.

In some embodiments, along a direction perpendicular to an axial direction of the injection port 102, a distance D between a maximum outer diameter of the sealing portion 333 and the pin rod 313 satisfies: 0.4 mm ≤ D ≤ 2.5 mm.

The battery cell 1 according to an embodiment of this application includes a housing 100, a cell body 200, and a sealing assembly 300. The sealing assembly 300 includes a sealing pin 310, a thermally deformable piece 320, and an elastic element 330. The elastic element 330 is set around the pin rod 332 through the second through-hole 331 and fixed to the injection port 102. The thermally deformable piece 320 fills in the first through-hole 311. The thermally deformable piece 320 is configured to deform when a temperature is higher than a preset threshold, so that a pressure relief channel that communicates with both ends of the first through-hole 311 is formed in the first through-hole 311.

In contrast to the battery cell currently available in the market, the thermally deformable piece 320 inside the battery cell 1 according to this embodiment of this application deforms when the temperature of the battery cell is higher than the preset threshold, so that a pressure relief channel is formed in the via hole 301 of the fastener 330 to exhaust the gas in the battery cell 1 outward to reduce safety hazards of battery cell explosion. In this way, the battery cell according to this embodiment of this application can overcome the current disadvantage that the gas in the battery cell cannot be exhausted in time when the temperature is higher than a specified value.

Understandably, although the sealing assembly 300 of the battery cell 1 in the foregoing embodiment includes the sealing pin 310, the thermally deformable piece 320, and the elastic element 330 concurrently, this application is not limited to such configuration, and the elastic element 330 is omissible in some circumstances. For example, in other embodiments of this application, the sealing assembly in the battery cell 1 may include just the sealing pin and the thermally deformable piece. In this case, the pinhead of the sealing pin is exposed outside the housing, and the pin rod extends into the housing. The thermally deformable piece fills in the first through-hole. In this way, the battery cell that includes the sealing assembly can also alleviate the current disadvantage that the gas is unable to be exhausted out of the battery cell in time when the temperature is higher than a specified value.

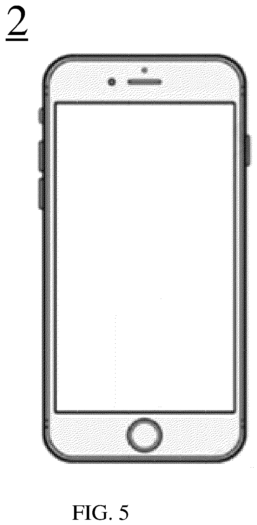

An embodiment of this application further provides an electrical device 2. Referring to FIG. 5, which is a schematic diagram of an electrical device 2 according to an embodiment of this application, the electrical device 2 includes the battery cell 1 according to any one of the foregoing embodiments. In this embodiment, the electrical device 2 is a mobile phone. Understandably, in other embodiments of this application, the electrical device 2 may be a tablet computer, a computer, an unmanned aerial vehicle, or another electrical device that needs to be powered electrically.

Finally, it is hereby noted that the foregoing embodiments are merely intended to describe the technical solutions of this application but not to limit this application. Based on the concept of this application, the technical features in the foregoing embodiments or different embodiments may be combined, the steps may be implemented in any order, and many variations may be made to this application in different aspects, which, for brevity, are not provided in detail. Although this application has been described in detail with reference to the foregoing embodiments, a person of ordinary skill in the art understands that modifications may still be made to the technical solutions described in the foregoing embodiments, or equivalent replacements may still be made to some technical features in the technical solutions. Such modifications and replacements do not make the essence of the corresponding technical solutions depart from the scope of the technical solutions of the embodiments of this application.

## Claims

1. A battery cell, comprising a cell body and a housing, wherein the housing defines an accommodation cavity, the cell body is accommodated in the accommodation cavity, and the housing comprises an injection port communicating with the accommodation cavity, **characterized in that** the battery cell further comprises:
a sealing pin, vertically mounted at the injection port and fixed to the housing, wherein the sealing pin comprises a first through-hole, and the first through-hole communicates with the accommodation cavity;
a thermally deformable piece, filling in the first through-hole and fixed to the sealing pin; and
an elastic element, wherein the elastic element comprises a second through-hole and is set around the sealing pin through the second through-hole and fixed to the injection port, wherein
the thermally deformable piece is configured to deform when a temperature is higher than a preset threshold, so that two ends of the first through-hole communicate with each other to form a pressure relief channel.

2. The battery cell according to claim 1, **characterized in that**
the elastic element comprises a fixing portion and a sealing portion coaxially connected to the fixing portion, the second through-hole runs through the sealing portion from the fixing portion, the fixing portion is fixed to the injection port, and the sealing portion extends into the accommodation cavity.

3. The battery cell according to claim 2, **characterized in that**
along a direction perpendicular to a direction in which the fixing portion extends to the sealing portion, in a part of the sealing portion placed in the accommodation cavity, a cross-sectional area of the sealing portion at an end close to the injection port is larger than a cross-sectional area of the injection port.

4. The battery cell according to claim 3, **characterized in that**
the sealing pin comprises a pinhead and a pin rod coaxially connected to the pinhead, the first through-hole runs through the pin rod from the pinhead, the pin rod is mounted onto the injection port, the pinhead is fixed onto the housing, and the elastic element is set around the pin rod.

5. The battery cell according to claim 4, **characterized in that**
along the direction perpendicular to the direction in which the fixing portion extends to the sealing portion, a cross-sectional area of the pinhead is larger than the cross-sectional area of the injection port, and a rim of the pinhead is hermetically fixed to the housing by welding.

6. The battery cell according to claim 4, **characterized in that**
the fixing portion and the sealing portion are integrally formed, and/or the pinhead and the pin rod are integrally formed.

7. The battery cell according to claim 4, **characterized in that**
a diameter A of the injection port satisfies: 2 mm ≤ A ≤ 5mm; and
a diameter B of the first through-hole satisfies: 1 mm ≤ B ≤ 4 mm.

8. The battery cell according to claim 7, **characterized in that**
along the direction perpendicular to the direction in which the fixing portion extends to the sealing portion, a clearance C between the injection port and the pin rod satisfies: 0.2 mm ≤ C ≤ 2 mm.

9. The battery cell according to claim 8, **characterized in that**
along a direction perpendicular to an axial direction of the injection port, a distance D between a maximum outer diameter of the sealing portion and the pin rod satisfies: 0.4 mm ≤ D ≤ 2.5 mm.

10. The battery cell according to claim 1, **characterized in that**
the thermally deformable piece is an insulation piece.

11. The battery cell according to claim 1, **characterized in that** the sealing pin comprises a metal; and/or
the thermally deformable piece comprises at least one of polyethylene, polypropylene, polyphenylene ether, or poly(acrylonitrile-co-styrene-co-butadiene); and/or
the elastic element comprises at least one of ethylene-propylene rubber, silicone rubber, polyurethane rubber, or fluororubber.

12. The battery cell according to claim 1, **characterized in that**
the housing is a stainless steel shell.

13. The battery cell according to claim 1, **characterized in that** the thermally deformable piece is configured to melt or shrink when the temperature is higher than the preset threshold, so as to form the pressure relief channel in the first through-hole.

14. An electrical device, **characterized in that** the electrical device comprises the battery cell according to any one of claims 1 to 13.
